# EUROPÄISCHE PATENTSCHRIFT

(11) **EP 0 597 215 B1**
(45) Veröffentlichungstag und Bekanntmachung des Hinweises auf die Patenterteilung: **27.11.1996**
(21) Anmeldenummer: 93115052.8
(22) Anmeldetag: 18.09.1993
(51) Int. Cl.: B23K 11/00, B23K 37/04

(54) **Abbrennstumpfschweissanlage**
Flash butt welding maschine
Appareillage pour le sondage par étincelage bout-à-bout

(30) Priorität: 09.11.1992 CH 3458/92
(43) Veröffentlichungstag der Anmeldung: 18.05.1994
(73) Patentinhaber: H.A. SCHLATTER AG, CH-8952 Schlieren Zürich (CH)
(72) Erfinder: Zollinger, Hansrudolf, CH-8954 Geroldswil (CH)
(74) Vertreter: Roshardt, Werner Alfred, Dipl.-Phys.

(56) Entgegenhaltungen:
- EP-A- 0 326 793
- EP-A- 0 461 575
- EP-A- 0 499 019
- DE-U- 8 717 265
- FR-A- 2 287 965
- US-A- 3 036 204
- US-A- 4 410 780
- US-A- 4 414 454
- US-A- 5 136 140

## Beschreibung

### Technisches Gebiet

Die Erfindung betrifft eine Abbrennstumpfschweissanlage zum Verschweissen von Profilwerkstücken, insbesondere von Schienen und Rohren, umfassend
a) zwei relativ zueinander verschiebbare Einspannsysteme zum Festhalten und Positionieren der Profilwerkstücke auf einer geometrischen Werkstückeinspannachse, wobei die Einspannsysteme von einer ersten Seite her senkrecht zur Werkstückeinspannachse zugänglich sind, und
b) eine Vorrichtung zum Verschieben der Einspannsysteme, insbesondere zum Stauchen der Profilwerkstücke beim Schweissen.
c) mindestens einen, mit dem einen Einspannsystem drehbar und mit dem anderen über mindestens einen Hebel in Wirkverbindung stehenden Stauchkraftgenerator zum Verschieben der Einspannsysteme, wobei
d) der Stauchkraftgenerator auf einer der zugänglichen ersten Seite bezüglich der Werkstückeinspannachse diametral gegenüberliegenden zweiten Seite angeordnet ist und im wesentlichen in Richtung der Werkstückeinspannachse arbeitet, und wobei
e) der Hebel mit dem zweiten Einspannsystem in einem nahe der Werkstückeinspannachse befindlichen Kraftangriffspunkt drehbaren Werkverbindung steht.

Eine solche Abbrennstumpfschweissanlage ist aus der US-A-4 414 454 bekannt.

### Stand der Technik

Beim Erstellen von neuen Geleisen oder beim Reparieren von bestehenden Geleisanlagen sind aneinanderstossende Schienenenden zu verschweissen. Es sind deshalb mobile Schienenschweissanlagen der eingangs genannten Art entwickelt worden.

Aus der EP-0 326 793 ist beispielsweise eine fahrbare elektrische Abbrennstumpfschweissmaschine bekannt, welche über eine Schienenziehvorrichtung in der Horizontalebene der Schienen verfügt. Sie umgreift den Schienenstoss ringförmig. Zwei Antriebszylinder sind links und rechts neben dem Schienenstoss angeordnet. Die Schienen werden mit einer Kniehebelanordnung zwischen Klemmbacken festgeklemmt. Die Schweisselektroden sind als Klemmbacken-Paare ausgebildet.

Sie werden mit separaten Zylindern an die Schiene gepresst. Innerhalb der ringförmigen Schienenzieheinrichtung ist die Schweissvorrichtung angeordnet. Aehnliche ringförmige Schienenziehvorrichtungen ergeben sich aus der US 4,983,801 und der US 5,136,140.

Mit diesem Abbrennstumpf-Schweissaggregat können zwar sehr hohe Zug- und Stauchkräfte erzeugt werden. Allerdings müssen vor resp. nach jedem Schweissvorgang Jochglieder und Bolzen eingesetzt resp. gelöst werden, damit die Schienen im Antriebssystem eingespannt resp. aus diesem entfernt werden können.

Aus der US-4,410,780 ist eine Schienenschweissmaschine mit zwei Greifzangen mit leitenden Klemmbacken bekannt. Die Greifzangen sind auf einer gemeinsamen Stange, die zugleich die Drehachse bildet, angeordnet. Die eine der beiden Greifzangen ist auf der Stange verschiebbar. Eine Abgratvorrichtung arbeitet unabhängig von den Greifzangen und ist durch Zylinder in Schienenlängsrichtung eigenständig verschiebbar. Diese Schweissmaschine ist zwar relativ kompakt, ist aber wegen der gemeinsamen Führungsstange hinsichtlich der Justiermöglichkeiten und -genauigkeiten beschränkt.

Aus der US 3,036,204 ist eine Schweissmaschine zum Verschweissen von Schienen bekannt. Die Maschine verfügt über einen feststehenden, isolierten Tisch, welcher eine erste Schiene und einen verschiebbaren Kopf unterstützt. Der Kopf hält die zweite Schiene zum Verschweissen mit der ersten fest (Spalte 1 Zeilen 10-15). Der Tisch 22 und die verschiebbare Plattform 24 haben ein paar in vertikaler Richtung betätigbare Klemmelemente 32, 34. Die Plattform 24 ist durch einen hydraulischen Zylinder 28, welcher auf dem feststehenden Tisch 22 angebracht ist, hin und her bewegbar. Die Zylinderstange 30 ist dabei direkt mit der Plattform 24 verbunden (Spalte 2 Zeilen 62-68). Die Kolbenzylindereinheit ist unterhalb der Achse des Werkstücks angeordnet.

Die aus der US 4,410,780 bekannte Abbrennstumpfschweissmaschine hat zwei Klemmzangen 17, 18 und 19, 20, welche auf einer gemeinsamen Welle 21 angeordnet sind. Die Klemmzangen 17, 18 und 19, 20 sind durch Kolben/Zylindereinheiten 22, 23 relativ zueinander auf der Welle verschiebbar, um die Schienenenden zusammenzubringen (Spalte 2 Zeilen 37-46).

Die aus der US 4,414,454 bekannte Schienenschweissmaschine 24 verfügt über einen ortsfesten Teil 42 und einen beweglichen Teil 52. Beide sind in einer Rahmenkonstruktion 40 gehalten (Spalte 5 Zeilen 3-8). Der bewegliche Teil 52 ist an der linken Seite mit einer flexiblen vertikalen Wand 116 verbunden und am rechten Ende mit einem Hebel 124 (Spalte 6 Zeilen 8-20). Während dem Schweissen betätigen die hydraulischen Zylinder 220 die Hebelarme 214, um die Stange 210, welche den beweglichen Teil 52 unterstützt, vor- und zurück zu bewegen. Aufgrund ihrer Flexibilität kann die Wand 116 die Vorwärts- und Rückwärtsbewegung des Teils 52 nachvollziehen (Spalte 9 Zeile 62 bis Spalte 10 Zeile 3). Eine in der Rahmenkonstruktion montierte Plattform 118 hat einen Führungsschlitz 120 zum Führen eines Führungsblocks 122 während der Stauchphase (Spalte 6 Zeilen 1-7).

### Darstellung der Erfindung

Aufgabe der Erfindung ist es, eine Abbrennstumpfschweissanlage der eingangs genannten Art anzugeben, die sich durch eine kompakte, d. h. raumsparende Bauweise auszeichnet, möglichst wenig manuelle Arbeit beim Betrieb erfordert und als mobile Schienenschweissanlage einsetzbar ist.

Gemäss der Erfindung besteht die Lösung darin, dass die Vorrichtung zum Verschieben der Einspannsysteme einen in einem Gehäuse linear verschiebbar gelagerten Schlitten, mit welchem der mindestens eine Hebel im Kraftangriffspunkt drehbar verbunden ist und mindestens einerseits am Gehäuse und andererseits am Drehpunkt des Hebels drehbar befestigte Zugstange aufweist.

Die Kraft zum Gegeneinanderziehen der Profilwerkstücke wird also nicht auf der Höhe der Einspannachse z. B. seitlich neben den Schienen (d. h. in der Horizontalebene der Schienen), sondern typischerweise oberhalb derselben z. B mit zwei hydraulischen Zylindern erzeugt. Zum Uebertragen resp. Umlenken der Zugkraft in die Einspannachse werden z. B. zwei in einer Vertikalebene bewegliche Hebel eingesetzt. Die Zugkraft wirkt daher im wesentlichen in der Längsachse der Profilwerkstücke, was geringe Biegekräfte der mechanischen Tragkonstruktion bewirkt.

Es wird ein zweiarmiger Hebel eingesetzt. Mit einem solchen können gute Kraftübertragungsverhältnisse realisiert werden.

Die Vorrichtung zum Verschieben der Einspannsysteme umfasst einen in einem Gehäuse linear verschiebbar gelagerten Schlitten. Mit diesem ist der mindestens eine Hebel in dem ihm zugeordneten Kraftangriffspunkt drehbar verbunden. Mindestens eine Zugstange ist einerseits am Gehäuse und andererseits an einem Hebel drehbar befestigt. Die mindestens eine Zugstange befindet sich zwischen dem Zugkraftgenerator und der Einspannachse. Dadurch entsteht eine symmetrische Anordnung mit einer vorteilhaften Kraft- und Drehmomentverteilung.

Gemäss einer besonders bevorzugten Ausführungsform sind Kontaktelektroden vorgesehen, die so ausgebildet sind, dass das Profilwerkstück jeweils an den Aussenseiten seines Kopfes und/oder seines Fusses kontaktiert wird. Dies bringt z. B. beim Schienenschweissen grosse Vorteile beim Vorbereiten der Schienen mit sich, da das unerlässliche Abschleifen der Schienenoberfläche nicht mühsam am Steg resp. unter dem Kopf, sondern bequem an der konvexen Aussenseite des Schienenprofils durchgeführt werden kann.

Vorzugsweise bilden die Kontaktelektroden jeweils näherungsweise V-förmige Oeffnungen zur Aufnahme der Profilwerkstücke mit nur geringem Spiel. Die Profilwerkstücke lassen sich senkrecht zur Einspannachse (z. B. von unten) einführen (z. B. indem die Schweissanlage auf die am Boden liegenden Werkstücke abgesenkt wird) und können dann durch die Einspannsysteme festgepresst werden. Vorzugsweise ist die Elektrodenanordnung starr, d. h. nicht als bewegliche Klemmbackenvorrichtung ausgebildet. Das Prinzip der V-förmigen Oeffnungen zwischen den Elektrodenteilen eignet sich vorzüglich zum Positionieren von Schienen auf die Fahrkante.

Weiter ist es von Vorteil, wenn die Abbrennstumpfschweissanlage eine Abgratvorrichtung mit ein- und ausschwenkbaren Messern aufweist, welche in der ausgeschwenkten Position in oder hinter einer durch die der Schweissstelle zugewandten Vorderseite einer Schweisselektrode definierten Ebene sowie ausserhalb der Kontaktelektrode gelagert sind. Der springende Punkt liegt darin, dass die Messer während des Schweissvorgangs in einer von Metallspritzern geschützten Position gelagert sind.

Die Messer sind dem Profil der Werkstücke angepasst und zusammen mit dem Schlitten verschiebbar. In der eingeschwenkten Position liegen die Messer auf den Kontaktelektroden auf. Sie werden beim Abgraten zusammen mit den Kontaktelektroden durch die Stauchkraftgeneratoren (Stauchzylinder) über die Schweissnahtstelle hinweggeschoben. Die Abgratvorrichtung erfordert also keine separaten Hydraulikzylinder oder dgl.

Besonders vorteilhaft ist es, wenn die Messer um Drehachsen schwenkbar sind, die so angeordnet sind, dass die beim Abgraten auftretenden Widerstandskräfte zu die Messer gegen die Schiene und auf die Kontaktelektroden pressenden Drehmomenten führen.

Gemäss einer weiteren vorteilhaften Ausführungsform umfasst das Einspannsystem Exzenterpressen. Vorzugsweise sind pro Schienenende vier paarweise angeordnete Exzenterwellen vorgesehen. Sie werden vorzugsweise in Kombination mit den V-förmigen Kontaktelektroden eingesetzt, um die Schienen gegen eine der beiden Flanken der Kontaktelektroden zu pressen.

Vorzugsweise umfasst das Einspannsystem als Exzenterpressen orthogonal zur Werkstückeinspannachse gelagerte Wellen mit exzentrisch gelagerten Spannbalken zum Einspannen des Profilwerkstücks. Die Spannbalken sind um eine horizontale, insbesondere eine zur Einspannachse parallele Achse schwenkbar und greifen am Profilsteg unterhalb des Profilkopfes an. Die Spannbalken können statt schwenkbar auch in anderer Weise höhenverstellbar ausgebildet sein.

Mit Vorteil ist ein senkrecht zur Werkstückeinspannachse ausgerichteter Hubzylinder eingebaut, der die schwenkbaren Spannbalken mittels Zugstangen (mehr oder weniger synchron) betätigt. Die Spannbalken können auch mit getrennten Antrieben versehen sein.

Durch das Nach-oben-Schwenken der Spannbalken kann das Profilwerkstück an einen in der Höhe justierbaren Anschlag gepresst werden. Ein solcher Anschlag kann z. B. durch eine senkrecht zur Werkstückeinspannachse eingebaute Spindel gebildet werden.

Gemäss einer besonders bevorzugten Ausführungsform umfasst das Einspannsystem zum Einspannen eines Profilwerkstücks vier Exzenterwellen, wobei je zwei auf derselben Seite der Einspannachse angeordnete Exzenterwellen durch einen mit einem Ende an der einen und mit dem anderen an der anderen Exzenterwelle angreifenden gemeinsamen Hubzylinder angetrieben werden. Dies hat den Vorteil, dass sowohl die Aktionskraft als auch die Reaktionskraft zum Pressen ausgenützt werden können. Der Gleichlauf der mit dem gemeinsamen Hubzylinder angetriebenen Exzenterwellen kann durch eine zusätzliche Verbindungsstange sichergestellt werden.

Gemäss einer weiteren bevorzugten Ausführungsform sind zum Justieren der zu verschweissenden Profilwerkstücke vier entlang der Einspannachse angeordnete Justierprofile vorgesehen, wobei vorzugsweise zwei davon durch die Kontaktelektroden gebildet sind. Zwischen zwei (in Achsenlängsrichtung) hintereinander angeordneten Justierprofilen befindet sich mindestens eine Einspannpresse. Jedes Justierprofil bietet zumindest einen winkelförmigen Anschlag. Die Einspannpressen greifen derart an den Profilwerkstücken an, dass letztere kantenjustiert in den genannten winkelförmigen Anschlag gepresst werden. Bei einer Schienenschweissanlage beispielsweise wird die Schiene mit dem Kopf in die "Justierecken" gepresst. Auf diese Weise lässt sich mit einfachen Mitteln eine präzise Justierung auf die Fahrkante erzielen.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Eine Seitenansicht der Schienenschweissanlage;
- Fig. 2: eine Längsansicht in der Schienenstossebene;
- Fig. 3: eine schematische Darstellung der Einspannsysteme;
- Fig. 4: eine Frontansicht des Einspannsystems;
- Fig. 5: das in Fig. 4 dargestellte Einspannsystem von oben betrachtet;
- Fig. 6a, b: eine Darstellung der Elektrodenanordnung in der Schienenstossebene (Fig. 6a) und von oben (Fig. 6b);
- Fig. 7a, b: eine Darstellung der Transformatoren von der Seite und von oben;
- Fig. 8: eine einseitige Darstellung der Abgratvorrichtung von oben;
- Fig. 9: eine einseitige Darstellung der Abgratvorrichtung von der Seite.

Grundsätzlich sind in den Zeichnungen gleiche Teile mit gleichen Bezugszeichen versehen.

Die Erfindung beschränkt sich nicht auf die beispielhaft dargestelllte Kombination von Zugvorrichtung, Einspannvorrichtung, Abgrateinrichtung, Fahrkantenjustierung und Elektrodenform. Insbesondere kann die Zugvorrichtung für sich oder in wahlweiser Kombination mit den sonstigen Teilsystemen (Einspannvorrichtung, Abgrateinrichtung, Fahrkantenjustierung, Elektrodenform) realisiert werden.

Aus der nachfolgenden Detailbeschreibung und der Gesamtheit der Patentansprüche ergeben sich weitere bevorzugte Ausführungsformen und Merkmalskombinationen.

### Wege zur Ausführung der Erfindung

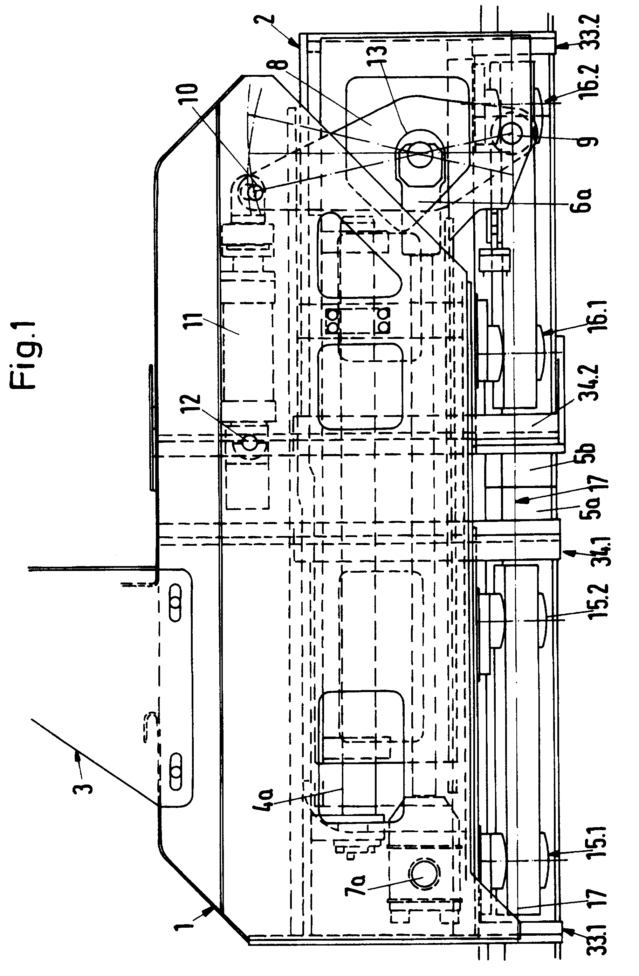

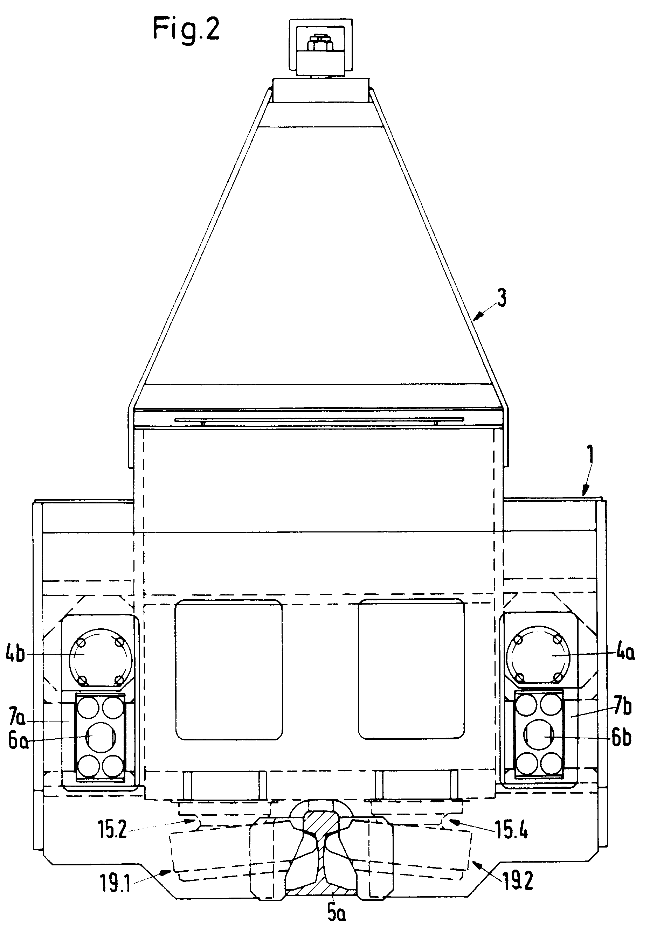

Fig. 1 und 2 zeigen im Sinn eines Ausführungsbeispiels eine mobile Schienenschweissanlage von der Seite und im Achsenquerschnitt. Die ganze in den Fig. 1 und 2 dargestellte Konstruktion ist z. B. in einem Schienen- oder Pneufahrzeug höhenverstellbar und lateral verschiebbar aufgehängt. Gemäss der Erfindung weist die mobile Schienenschweissanlage ein Gehäuse 1 auf, in welchem ein Schlitten 2 linear verschiebbar gelagert ist. Oben am Gehäuse 1 ist eine Aufhängekonstruktion 3 (z. B. Rahmen mit Haken) angebracht. An ihr wird die ganze Schienenschweissanlage im oben beispielhaft erwähnten Fahrzeug aufgehängt.

Gehäuse 1 und Schlitten 2 sind rahmenartige Metallkonstruktionen. In der Nähe der Längsseitenwände sind im Gehäuse 1 zwei Führungsstangen 4a, 4b angebracht. Auf diesen ist der Schlitten 2 verschiebbar gelagert. Zur Sicherstellung der elektrischen Isolation zwischen Gehäuse 1 und Schlitten 2 sind die Führungsstangen 4a, 4b durch elektrische Isolatoren im Gehäuse 1 gehalten. Die Gleitlager zwischen Schlitten 2 und Führungsstangen 4a, 4b sind dagegen nicht isoliert. Die Führungsstangen 4a, 4b sind daher auf demselben Potential wie der Schlitten 2. Wie weiter unten noch zu erläutern sein wird, werden die Führungsstangen 4a, 4b resp. die Gleitlager beim Stauchen der Schienen keinen besonders grossen Biegemomenten ausgesetzt. Zur Reduktion des Gewichts der Schienenschweissanlage können sie daher als Hohlwellen ausgebildet sein.

Im Gehäuse 1 und im Schlitten 2 ist je ein Einspannsystem zum Festhalten der zu verschweissenden Schienenenden 5a, 5b eingebaut. Die Schienenenden 5a, 5b werden durch die Einspannsysteme auf einer gemeinsamen Schieneneinspannachse 17 (parallel zur Längsachse der Schienenschweissmaschine und vorzugsweise in deren vertikalen Längsmittelebene) festgehalten.

Während eines Abbrennstumpfschweissvorgangs müssen bekanntlich die Schienenenden 5a, 5b zunächst langsam zusammengeführt und zum Schluss kräftig gestaucht werden. Die dafür erforderliche Zugkraft wird gemäss der Erfindung mit Vorteil wie folgt erzeugt und zur Wirkung gebracht.

Unterhalb der Führungsstangen 4a, 4b sind z. B. zwei Zugstangen 6a, 6b vorgesehen. Sie erstrecken sich im wesentlichen in Richtung der Längsachse der Schienenschweissanlage und sind an einem Ende mittels Lagerachsen 7a, 7b am Gehäuse 1 isoliert verankert. Die Lagerachsen 7a, 7b liegen horizontal und erlauben eine Schwenkbewegung der Zugstangen 6a, 6b in einer vertikalen Ebene. Da die Zugvorrichtung im wesentlichen spiegelsymmetrisch zur Längsmittelebene ausgebildet ist, wird im folgenden nur noch die eine Hälfte im Detail beschrieben.

Das andere Ende der Zugstange 6a ist gelenkig mit einem ebenfalls in einer vertikalen Ebene schwenkbaren Hebel 8 verbunden. Bezüglich des erwähnten Verbindungspunktes hat der Hebel 8 zwei Arme. Der untere dieser beiden Arme ist auf der Höhe der Schieneneinspannachse 17 mittels einer Lagerachse 9 mit dem Schlitten 2 verbunden. Der obere Arm ist mit seinem Ende in einer Drehachse 10 mit dem Kolben eines in Längsrichtung liegenden Presszylinders 11 verbunden. Der Presszylinder 11 seinerseits ist durch eine (horizontale) Lagerachse 12 mit dem Gehäuse 1 verbunden.

Im Gehäuse 1 und im Schlitten 2 ist je ein Einspannsystem zum Ergreifen und Festhalten der Schienenenden 5a, 5b eingebaut. Mit dem erfindungsgemässen Mechanismus werden die Schienenenden 5a, 5b nach dem folgenden Wirkungsprinzip zusammengepresst. Der Presszylinder 11 schiebt den oberen Arm des Hebels 8 in der Darstellung gemäss Fig. 1 nach rechts. Die Lagerachse 13, die etwa in der Mitte des Hebels 8 ist, wird durch die Zugstange 6a auf einen Kreisbogen um die Lagerachse 7a gezwungen. Daher verschiebt sich die Lagerachse 9 und damit der Schlitten 2 in das Gehäuse 1 hinein, d. h. in der Darstellung gemäss Fig. 1 nach links. Die Lagerachse 9 bewegt sich (bedingt durch die erfindungsgemässe Führung des Schlittens 2) auf einem streng linearen Pfad parallel zur Schieneneinspannachse 17. Die Lagerachse 9 stellt den Kraftangriffspunkt des Hebels dar. In diesem wird die Verschiebekraft des Presszylinders 11 auf den Schlitten 2 und damit das entsprechende Einspannsystem übertragen. Gemäss der Erfindung ist der genannte Kraftangriffspunkt möglichst nahe an der Schieneneinspannachse 17 vorgesehen. D. h. eine durch die Lagerachse 9 gehende (gedachte) Gerade sollte die geometrische Werkstückeinspannachse 17 vorzugsweise schneiden oder von ihr einen möglichst geringen Abstand haben.

Der Vorteil dieser Anordnung besteht in der symmetrischen Belastung der Gehäuse-/Schlittenkonstruktion. Dies ist dadurch bedingt, dass die Zugstangen 6a, 6b zwischen den ihnen zugeordneten Presszylindern (Aktionskräften) und den Schienen (d. h. den Reaktionskräften) liegt. Unerwünschte Biegemomente auf die Gehäusekonstruktion werden weitgehend vermieden. Ferner wird durch die erfindungsgemässe Konstruktion der Raum auf der Höhe der Schienen freigehalten.

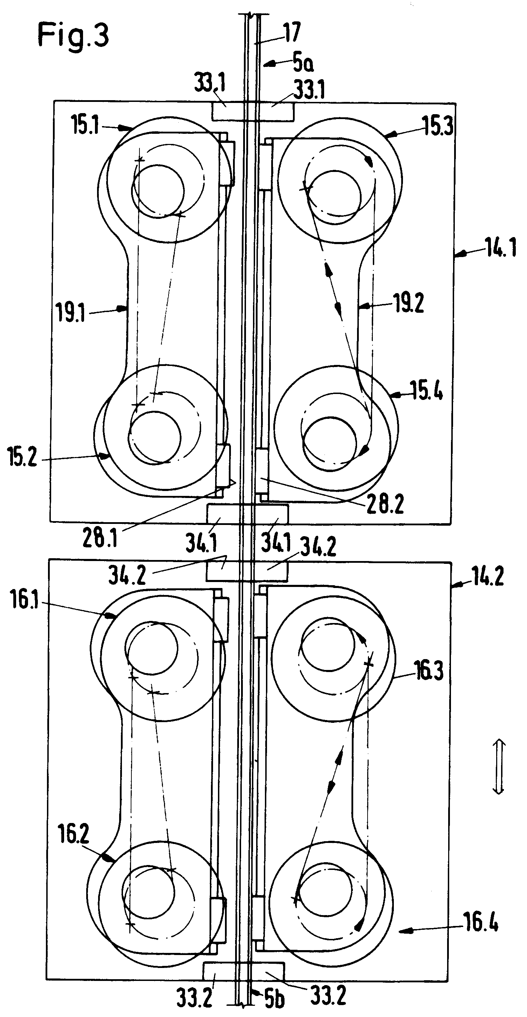

Anhand der Fig. 3 bis 5 sollen nun die erfindungsgemässen einseitig zugänglichen Einspannsysteme erläutert werden.

Fig. 3 veranschaulicht das Prinzip. Jedes Einspannsystem 14.1, 14.2 umfasst vier Exzenterwellen 15.1, ..., 15.4 resp. 16.1, ..., 16.4. Die Exzenterwellen 15.1, ..., 15.4, 16.1, ..., 16.4 sind paarweise gegenüberliegend (15.1 und 15.3, 15.2 und 15.4, 16.1 und 16.3, 16.2 und 16.4) entlang der Schieneneinspannachse 17 angeordnet. Sie sind vertikal d. h. im wesentlichen orthogonal zur Werkstückeinspannachse angeordnet und paarweise mit exzentrisch gelagerten, um eine horizontale, zur Schieneneinspannachse 17 parallele Achse schwenkbaren Spannbalken 19.1, 19.2 ausgerüstet. (Jeder Spannbalken z. B. 19.1 wird durch zwei synchrone Exzenterwellen z. B. 15.1, 15.2 bewegt.) Durch das Drehen der Wellen können die Spannbalken 19.1, 19.2 auf die Schieneneinspannachse zu resp. von ihr wegbewegt werden.

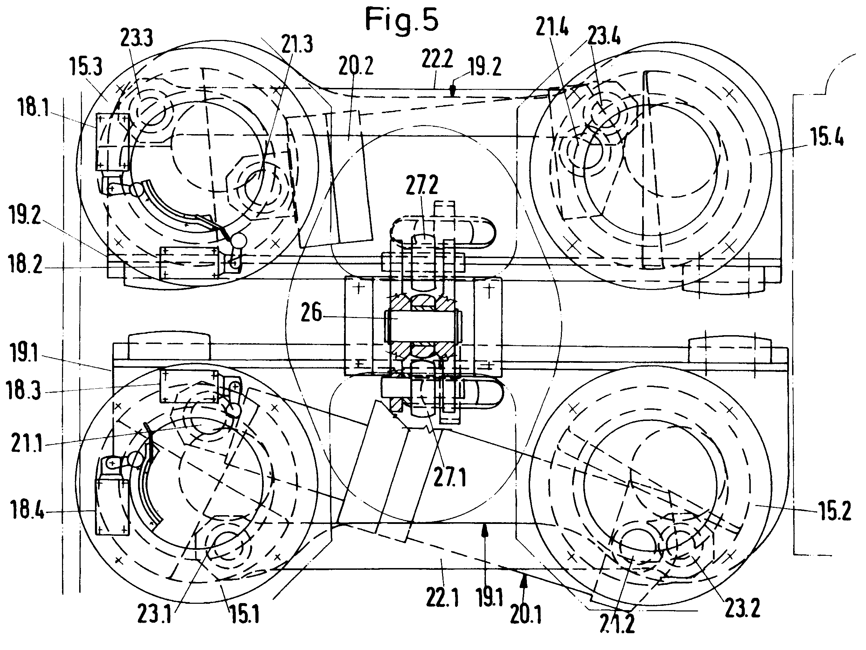

Gemäss der Erfindung werden zwei auf der gleichen Seite der Schieneneinspannachse 17 angeordnete Exzenterwellen zu einer Funktionseinheit zusammengefasst. Wie aus Fig. 5 zu entnehmen ist, greift jeweils ein Presszylinder 20.1, 20.2 an jeder der zusammengehörigen Wellen exzentrisch (Lagerbolzen 21.1, 21.2 resp. 21.3, 21.4) an. Die Lagerbolzen 21.1, 21.2 resp. 21.3, 21.4 sind so angeordnet, dass die Betätigung des Presszylinders 20.1, 20.2 zu einer gleichsinnigen Drehung der zwei funktionsmässig zusammengefassten Wellen (15.1, 15.2 resp. 15.3, 15.4) führt. Die durch den selben Presszylinder betätigten Exzenterwellen 15.1, 15.2 resp. 15.3, 15.4 sind ferner mit Kuppelstangen 22.1 resp. 22.2 (die an exzentrisch angeordneten Bolzen 23.1, ..., 23.4 angreifen) bewegungsmässig gekoppelt. Jeder Ausdehnung des Presszylinders ist dadurch eine eindeutige Stellung der Exzenterwellen 15.1, ..., 15.4 zuordenbar. Die soeben beschriebene Konstruktion hat den Vorteil, dass sowohl die Aktions- als auch die Reaktionskraft bei den Presszylindern zum Festhalten der Schienen ausgenützt werden können.

Um die Stellungen der Exzenterpressen zu überwachen, können Endschalter 18.1, ..., 18.4 vorgesehen sein. Sie zeigen das Erreichen einer Endposition an. Es können natürlich auch Positionssensoren vorgesehen sein, die genau die Stellung angeben, in welcher sich die Exzenterpressen befinden. Dann ist es auch möglich, unter entsprechender Anpassung der Stromeinbringung die Schienen mittenzentriert zu verschweissen.

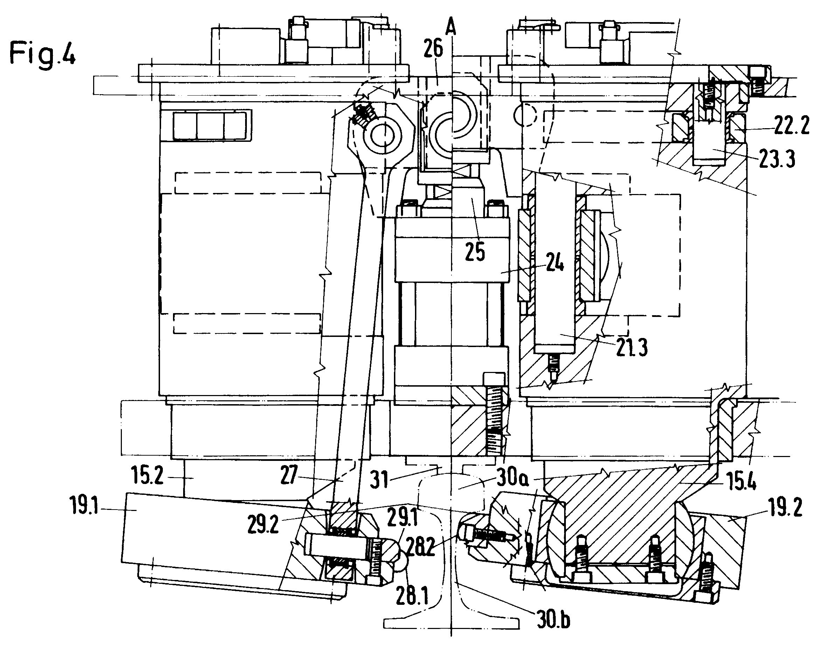

Wie bereits erwähnt, sind die Spannbalken 19.1, 19.2 schwenkbar, vorzugsweise kugelgelenkartig auf den Exzenterwellen 15.1 und 15.2 resp. 15.3 und 15.4 gelagert. Die Schwenkbewegung wird durch einen im Einspannsystem zentral angeordneten, vertikal ausgerichteten Hubzylinder 24 gesteuert. Auf seinem nach oben pressbaren Kolben 25 ist ein Kupplungsteil 26 montiert. Dieses ist um eine horizontale, zur Schieneneinspannachse parallele Achse drehbar. Beidseits der Mittelachse des Kupplungsteils 26 ist je eine Zugstange z. B. 27 (vgl. Fig. 4) gelenkig angebracht. Das untere Ende der Zugstange 27 ist je mit dem entsprechenden Spannbalken 19.1 resp. 19.2 gelenkig verbunden.

Wird der Hubzylinder 24 betätigt, dann wird das Kupplungsteil 26 durch den Kolben 25 nach oben gepresst, wodurch die beiden Spannbalken 19.1, 19.2 ebenfalls nach oben geschwenkt werden (z. B. von -6° auf +6° um ca. 20 mm). Die gelenkige Lagerung des Kupplungsteils 26 verteilt die Zugkräfte gleichmässig auf die beiden Spannbalken 19.1 und 19.2.

An ihren der Schieneneinspannachse zugewandten Seiten weisen die Spannbalken 19.1 und 19.2 Nasen 28.1, 29.1 resp. 28.2, 29.2 auf. Diese Nasen 28.1, 28.2 und 29.1, 29.2 sind so angeordnet, dass sie beim Einspannen der Schiene und beim Nach-oben-Schwenken der Spannbalken 19.1 und 19.2 am oberen Teil des Schienenstegs 30b resp. unten am Schienenkopf 30a angreifen. Durch den Hubzylinder 24 wird der Schienenkopf 30a von unten an eine Spindelspitze 31 gepresst. Durch Einstellen der Höhe der Spindelspitze 31 werden die aneinanderzuschweissenden Enden der Schienen höhenmässig gegenseitig justiert.

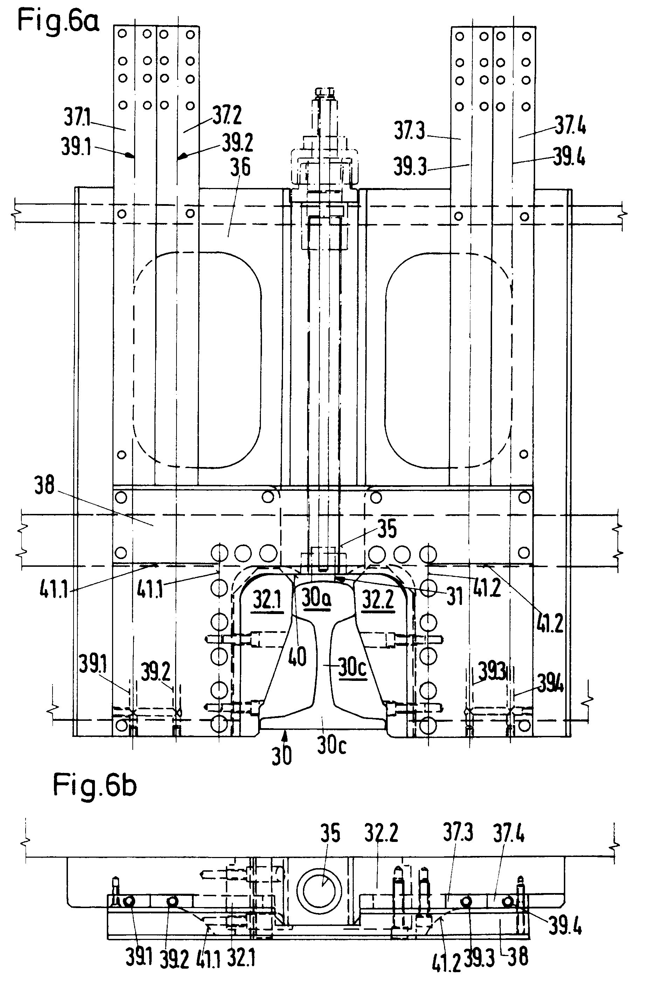

In den Fig. 6a, 6b ist die Elektrodenanordnung dargestellt. Die erfindungsgemässe Kontaktierung der Schiene zeichnet sich dadurch aus, dass sie nicht "innen", d. h. an einem konkaven Teil des Profils (z. B. am Steg 30b), sondern "aussen", d. h. an einem konvexen Teil, insbesondere seitlich am Schienenkopf 30a und am Schienenfuss 30c stattfindet. Gemäss der Erfindung sind zwei Elektrodenteile 32.1, 32.2 ortsfest an der Rahmenkonstruktion des Gehäuses 1 vorgesehen. Sie sind so geformt, dass zwischen ihnen ein senkrecht zur Einspannachse sich V-förmig verengender in Achsenrichtung verlaufender Durchtritt vorhanden ist. Die Verengung findet von unten nach oben statt und zwar in einem solchen Ausmass, dass das Schienenprofil mit wenig Spiel aufgenommen werden kann. Eine seitliche Justierung findet durch an den Elektrodenteilen 32.1, 32.2 ausgebildete Anschlagflächen (für die Aussenseiten des Schienenkopfes 30a und des Schienenfusses 30c) statt.

Die beiden Elektrodenteile 32.1, 32.2 bilden somit ein Justierprofil 34.1 (vgl. dazu Fig. 1). Auf dem Schlitten 2 sind ebenfalls zwei solche Elektrodenteile ortsfest (bezüglich des Schlittens 2) angeordnet, welche ein Justierprofil 34.2 bilden. An den beiden Enden der Schienenschweissanlage sind zwei weitere Justierprofile 33.1, 33.2 vorgesehen. Diese bestehen allerdings im Unterschied zu den Elektrodenteilen nicht aus Kupfer, sondern z. B. aus verschleissfestem Stahl. Wie aus Fig. 1 und Fig. 3 zu erkennen ist, befinden sich zwischen je zwei Justierprofilen 33.1 und 34.1 resp. 34.2 und 33.2 je zwei Exzenterpressen (vgl. Fig. 3-5). Diese erfindungsgemässe Konstruktion ermöglicht eine einfache Fahrkantjustierung der verlegten Schienen. Dies geschieht dadurch, dass die Schienenprofile in die Justierprofile 33.1, 33.2, 34.1, 34.2 eingeführt werden (z. B. durch Absenken der Schienenschweissanlage auf die verlegten Schienen), die Exzenterpressen mit relativ kleinem Druck beaufschlagt werden (Schiene wird vom Einspannsystem ergriffen), die Schienenköpfe durch Betätigen des Hubzylinders 24 angehoben und dann die Schienenprofile mit voller Kraft der auf der einen Seite angeordneten Exzenterpressen gegen die gegenüberliegende Seite der Justierhilfen (Elektroden, Spindelspitzen etc.) gepresst werden.

In der Darstellung gemäss Fig. 3 werden also z. B. die schematisch angedeuteten Exzenterwellen 15.3, 15.4, 16.3 und 16.4 mit hohem Druck beaufschlagt, so dass die Schienen in der Darstellung gemäss Fig. 3 an die linksseitigen Anschlagflächen der Justierhilfen (resp. Elektroden) gepresst werden. Die Schienenenden werden infolgedessen bezüglich ihrer linken Kanten aufeinander ausgerichtet.

Diese Art der Justierung hat den Vorteil, dass auch unterschiedlich stark abgenutzte Schienen resp. neue und alte Schienen fahrkantenjustiert verschweisst werden können.

In Fig. 6a, b ist eine Bohrung 35 eingezeichnet, in welcher eine Spindel zur Justierung der Schienenhöhe gelagert ist (vgl. dazu Fig. 4: Spindelspitze 31). Wie es sich nun zeigt, begrenzt die Spindelspitze 31 den durch die Elektrodenteile 32.1, 32.2 seitlich umrahmten Schienenaufnahmeraum nach oben, da sie zwischen den genannten Elektrodenteilen 32.1, 32.2 vorgesehen ist.

Das Prinzip der erfindungsgemässen Justierung besteht mithin darin, dass zwei unter einem Winkel zueinander stehende Anschlagflächen (z. B. eine Seite der Elektrode und die Spindelspitze) im Sinn eines winkelförmigen Anschlages vorhanden sind und dass die Schiene mittels einer Pressvorrichtung in diesen winkelförmigen Anschlag hineingepresst wird. Dadurch lässt sich eine Justierung in zwei zueinander senkrechten Richtungen erzielen.

Im folgenden wird der elektrische Teil der Schienenschweissanlage beschrieben. Da die Stromversorgung für die auf dem Gehäuse angebrachten Elektroden weitgehend symmetrisch zu derjenigen der am Schlitten angebrachten konstruiert ist, wird im folgenden nur diejenige des Schlittens detailliert erläutert.

Auf einer Tragkonstruktion 36 (z. B. aus Stahl) sind zwei Paare von Stromschienen 37.1, 37.2 und 37.3, 37.4 angebracht. Sie sind vertikal ausgerichtet und laufen von oben, wo Transformatoranschlüsse vorgesehen sind, bis ganz unten, wo die Elektrodenteile 32.1, 32.2 angeordnet sind. Durch die zwei Paare von Stromschienen 37.1, 37.2 und 37.3, 37.4 werden zwei Stromzuführungen gebildet. Die beiden unmittelbar benachbarten Stromschienen 37.1, 37.2 resp. 37.3, 37.4 sind mit Kühlkanälen 39.1, 39.2 resp. 39.3, 39.4 versehen. Die Kühlkanäle 39.1, ..., 39.4 durchsetzen die Stromschienen 37.1, ..., 37.4 in Längsrichtung derart, dass bei jeder Stromzuführung ein Kühlmedium von oben zugeführt und auch wieder dort abgeführt werden kann. Am einfachsten ist es, wenn die benachbarten Stromschienen 37.1, 37.2 je eine Längsbohrung und eine diese am unteren Ende verbindende Querbohrung umfassen.

Auf die Stromschienen 37.1, ..., 37.4 ist von vorn ein Kupferblock 38 (Grundelektrode) aufgeschweisst. Er verbindet die vier Stromschienen 37.1, ..., 37.4 elektrisch miteinander. Im Bereich der Schieneneinspannachse hat er eine U-förmige Ausnehmung 40. An den beiden Seitenwänden dieser Ausnehmung 40 sind die Elektrodenteile 32.1, 32.2 befestigt.

Die Tragkonstruktion 36, auf welcher der Kupferblock 38 befestigt ist, besitzt ebenfalls eine entsprechende U-förmige Ausnehmung auf der Schieneneinspannachse. Die Elektrodenteile 32.1, 32.2 sind breiter, als der Kupferblock 38 dick ist und werden im vorliegenden Beispiel nicht nur am Kupferblock 38, sondern auch an der Tragkonstruktion 36 festgeschraubt.

Auf der Höhe der Schieneneinspannachse weist der Kupferblock 38 ferner auf beiden Seiten der U-förmigen Ausnehmung 40 flache Ausnehmungen 41.1, 41.2 auf, in die die Messer der weiter unten zu beschreibenden Abgratvorrichtung eingelegt werden können. Die seitlichen Ausnehmung 41.1, 41.2 erstrecken sich in vertikaler Richtung zumindest über den Höhenbereich, der durch die Ausnehmung 40 eingenommen wird. Dies entspricht etwas mehr als der Höhe der Schiene 30.

Der auf dem Gehäuse montierte Elektrodenblock braucht diese Ausnehmungen 41.1, 41.2 nicht zu besitzen, da am Gehäuse auch keine Abgratvorrichtung montiert ist.

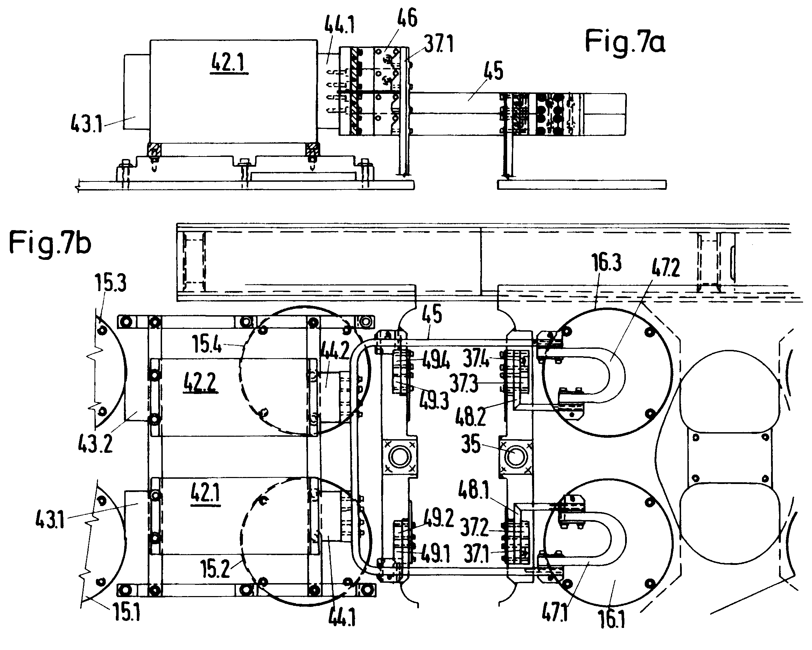

Fig. 7a, 7b zeigt den bisher noch nicht erläuterten Teil des Schweissstromkreislaufes. Oben auf der Tragkonstruktion 36 sind beispielsweise zwei Schweisstransformatoren 42.1, 42.2 seitlich nebeneinander montiert. Sie sind parallel zur Längsachse (Schieneneinspannachse) der Schienenschweissanlage ausgerichtet. Nicht näher dargestellte Primäranschlüsse 43.1, 43.2 befinden sich auf der der Schweissebene abgewandten Seite der Schweisstransformatoren 42.1, 42.2. Die beiden Schweisstransformatoren 42.1, 42.2 sind auf der Sekundärseite parallel geschaltet. Die eine Seite der Sekundäranschlüsse 44.1, 44.2 steht mit einer U-förmig gebogenen Stromschiene 45 in Verbindung. Die beiden Seitenarme dieser U-förmigen Stromschiene 45 ragen (parallel zur Längsachse) über die durch den Schienenstoss definierte Ebene hinaus in den Bereich des verschiebbar gelagerten Schlittens (vgl. Fig. 1, Bezugszeichen 2). Eine zweite Stromschiene 46 verbindet die zweiten Anschlüsse der Sekundärseite mit Stromschienen 49.1, ..., 49.4, welche spiegelbildlich zu den weiter oben beschriebenen Stromschienen 37.1, ..., 37.4 ausgebildet resp. angeordnet sind.

An den Armen der Stromschiene 45 sind flexible Bandleiter 47.1, 47.2 festgeschraubt. Diese sind an ihrem zweiten Ende mit den Stromschienen 48.1, 48.2 verbunden, die auf dem Schlitten fixiert sind. Dadurch, dass die Bandleiter 47.1, 47.2 U-förmig auf sich selbst zurückgefaltet sind, kann der Schlitten verschoben werden, ohne dass eine Kontaktstelle (wie sie z. B. bei Gleitkontakten gegeben ist) sich ändern würde.

Die Stromschienen 48.1, 48.2 sind dann mit den vertikalen Stromschienen 37.1, ..., 37.4 verbunden.

Der Stromkreislauf auf der Sekundärseite der Schweisstransformatoren 42.1, 42.2 sieht damit wie folgt aus: Erster Anschluss der Sekundärseite - Stromschiene 45 - Bandleiter 47.1, 47.2 (parallel geschaltet) - Stromschienen 48.1, 48.2 (parallel geschaltet) - Stromschienen 37.1, ... , 37.4 (parallel geschaltet) - Kupferblock 38 (vgl. Fig. 6a, 6b) - Elektrodenteile 32.1, 32.2 - Schienenende 5b - Schienenende 5a - Elektrodenteile, Kupferblock und Stromschienen 49.1, ... , 49.4 (analog zu Fig. 6a, 6b) - Stromschiene 46 - zweite Seite der Sekundäranschlüsse 44.1, 44.2 der Schweisstransformatoren 42.1, 42.2.

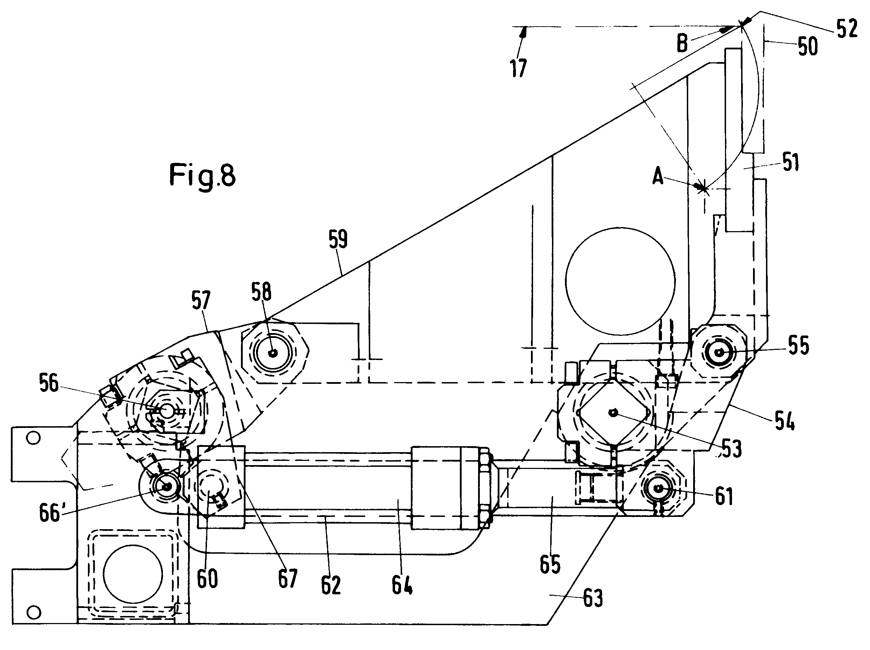

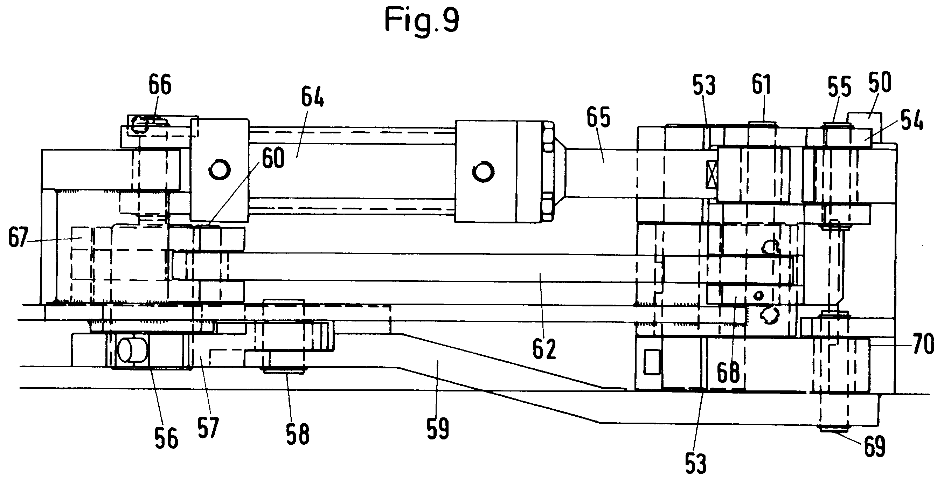

Anhand der Fig. 8 und 9 soll als nächstes eine bevorzugte Ausführungsform einer erfindungsgemässen Abgratvorrichtung erläutert werden. Beim Schweissen entsteht am Schienenstoss ein Materialwulst, den es zu entfernen gilt. Im Prinzip kann dies mit bekannten Vorrichtungen durchgeführt werden. Vorzugsweise sind jedoch z. B. zwei Messer - wovon in Fig. 8 eines mit dem Bezugszeichen 50 angedeutet ist - vorgesehen, die ein- und ausschwenkbar sind und die zwischen sich einen Freiraum bilden, der gerade dem Profilquerschnitt der geschweissten Schiene entspricht. Die Abgratvorrichtung insgesamt und insbesondere die Messer sind spiegelbildlich zu einer vertikalen Ebene, in welcher die Schieneneinspannachse verläuft, ausgebildet. Im folgenden wird deshalb nur eine der beiden Hälften der Vorrichtung beschrieben.

Das Messer 50 ist eine Platte, die von einer Halterung 51 senkrecht zur Schieneneinspannachse 17 schwenkbar gehalten ist. Die der Schieneneinspannachse 17 zugewandte Seite weist eine Ausnehmung auf, die dem halben (negativen) Schienenprofil entspricht.

Durch einen geeigneten Mechanismus wird das Messer 50 derart ein- und ausgeschwenkt, dass ein vorderer Eckpunkt 52 des Messers 50 von einer ausgeschwenkten Position A in eine eingeschwenkte Position B bewegt werden kann. Von Punkt A zu Punkt B bewegt sich der Eckpunkt 52 auf einem Kreisbogen mit einem Zentrumswinkel von etwa 90°.

In der eingeschwenkten Position liegen die Messer auf den Kontaktelektroden flach auf. Beim Abgraten bieten letztere den Messern eine gute Abstützung. Der Schwenkmechanismus wird infolgedessen durch die auftretenden Kräfte beim Abgraten im wesentlichen nicht belastet.

Während des Abgratens treten beträchtliche Reibungskräfte zwischen dem Messer und der Schiene auf, die nicht nur in Bewegungsrichtung des Messers 50 sondern auch zu einem gewissen Teil senkrecht dazu wirken. Gemäss der Erfindung ist der Schwenkmechanismus so ausgebildet, dass die Reibungskräfte im Schwenkmechanismus zu einem Drehmoment führen, das das Messer 50 an die Schiene und die Elektrode anpresst.

Das Messer 50 wird von der bereits erwähnten Halterung 51 gehalten. Die Halterung 51 wird von einer dreieckförmigen Abstützplatte 59 gestützt. Diese greift unten an der Halterung 51 an und verjüngt sich nach hinten (d. h. ausgehend vom Messer 50 verjüngt sie sich in einer zur Abgratrichtung entgegengesetzten Richtung). In der Draufsicht ist die Abstützplatte 59 z. B. im wesentlichen ein rechtwinkliges Dreieck, dessen eine, kurze Kathete senkrecht zur Schieneneinspannachse und dessen andere, lange parallel zur Schieneneinspannachse 17 verläuft. Die Abstützplatte 59 ist an einem hinteren Ende von einem Hebel 57 mittels einer Achse 58 und an einem vorderen Ende von einem Hebel 70 mittels einer Achse 69 drehbar gelagert. Die Halterung 51 ist mittels einer Achse 55, die fluchtend mit der Achse 69 angeordnet ist, von einem Hebel 54 gehalten. Die beiden Achsen 58 und 55/69 liegen vorzugsweise auf einer zur Schieneneinspannachse parellelen Linie.

Der Hebel 57 ist um eine Achse 56 und die Hebel 54, 70 um eine Achse 53 schwenkbar. Die Hebel 54 und 70 sind übereinander angeordnet und bewegen sich synchron (identische Stellung). Die beiden vertikalen Achsen 56 und 53 sind ortsfest bezüglich eines Schlittenrahmens 63, welcher die ganze Abgratvorrichtung trägt. Die Achsen 56 und 53 haben im übrigen denselben gegenseitigen Abstand wie die Achsen 58 und 55/69 und liegen auf einer zu den letztgenannten Achsen parallelen Linie.

Eine Kupplungstange 62 ist mit ihren Enden gelenkig einerseits mit einem Hebel 67 und andererseits mit einem Hebel 68 (vgl. Fig. 9) verbunden. Der Hebel 67 ist in einem starren 90°-Winkel bezüglich des Hebels 57 um die Achse 56 drehbar. In analoger Weise ist der Hebel 68 in einem starren Winkel zum Hebel 54 um die Achse 53 drehbar. Auf diese Weise kann das Messer 50 stabil und parallel ein- resp. ausgeschwenkt werden. Probleme mit dem Durchlauf durch den toten Punkt werden damit vermieden.

Das Ein- und Ausschwenken wird durch einen Hubzylinder 64 bewirkt. Dieser ist am Schlittenrahmen 63 durch eine Achse 66 drehbar verankert. Die Achse 66 befindet sich vorzugsweise (in Richtung der Einspannachse) auf gleicher Höhe wie die Achse 56. Die Kolbenstange 65 des Hubzylinders 64 ist in einer Achse 61 mit dem Hebel 54 gelenkig verbunden. Wie aus Fig. 9 zu entnehmen ist, sind die vertikalen Achsen 55 und 69 (wie bereits erwähnt) fluchtend ausgerichtet. Ferner ist zu beachten, dass die Kolbenstange 65 und die Kuppelstange 62 mit einer gemeinsamen Achse 61 verbunden sind.

In Fig. 8 ist das Messer 50 in eingeschwenkter Position gezeigt. Die Kolbenstange 65 ist ausgefahren und die Verbindungslinien zwischen den Achsen 56 und 58 resp. 53 und 55 stehen etwa in einem 30°-Winkel zu einer die Achsen 56 und 53 verbindenden Geraden. Die Abstützplatte 59 ist also über den Totpunkt (bei welchen die Achsen 56, 58, 53, 55 auf einer gemeinsamen Linie sind) hinweg nach innen (d. h. gegen die Schieneneinspannachse hin) geschwenkt. Gemäss der Erfindung ist bei diesem Schwenkwinkel der Abstand des Eckpunktes 52 von der Achse 55 und die Achse 55 von der Achse 53 (unter den gegebenen Winkelverhältnissen) soweit entfernt, dass die Reibungskräfte beim Abgraten zu einem das Messer 50 auf die Schiene pressenden Drehmoment (bezüglich der Achse 53) führen.

Wie aus Fig. 9 zu entnehmen ist, ist die Abstützplatte 59 zuunterst, die Kuppelstange 62 in der Mitte und der Hubzylinder 64 (in vertikaler Richtung) zuoberst angeordnet. Die Abstützplatte 59 ist in der vorliegenden Ausführungsform (vgl. Fig. 9) nicht flach ausgebildet, sondern weist ein rampenartiges Zwischenstück auf. Dadurch wird es möglich, die Verbindung mit der Achse 58 höher anzuordnen, als diejenige mit der Achse 69. Die Tiefe resp. Höhe der Achse 69 ist nämlich durch die Unterseite des Schienenprofils bestimmt, die es ja ebenfalls abzugraten gilt. Die Bauhöhe des hinteren Teils der Abgratvorrichtung kann also geringer gehalten werden, als diejenige des vorderen Teils.

Das Schienenschweissen mit der erfindungsgemässen Anlage geht wie folgt vor sich.

Als erstes wird die Schienenschweissanlage auf die aneinanderstossenden Enden der Schienen 5a, 5b abgesenkt. Dabei gelangen die Schienen in die dazu vorgesehenen Oeffnungen der Justierprofile 33.1, 33.2, 34.1, 34.2. Der Schienenstoss kommt zwischen die inneren Justierprofile 34.1, 34.2 (= Elektroden) zu liegen (vgl. Fig. 1).

Als zweites werden die Exzenterpressen angesetzt. Alle Presszylinder (vgl. z. B. Bezugszeichen 20.1, 20.2 in Fig. 5) werden mit einem verhältnismässig geringen Druck beaufschlagt, so dass die Spannbalken (vgl. 19.1, 19.2 in Fig. 4) nur leicht an die Schienen angepresst werden. Die Spannbalken werden durch Betätigung des Hubzylinders (vgl. Bezugszeichen 24 in Fig. 4) nach oben gegen die Spindelspitze (vgl. Bezugszeichen 31 in Fig. 4) gedrückt. Damit sind die beiden Schienenenden höhenjustiert.

Als drittes folgt die Justierung auf die Fahrkante. Dazu werden die der Fahrkante abgewandten Exzenterpressen mit grossem Druck beaufschlagt, so dass die beiden Schienenenden an die auf der Seite der Fahrkante liegenden Seitenwände der Justierprofile 33.1, 33.2, 34.1, 34.2 gepresst werden. Die auf der Seite der Fahrkante angeordneten Exzenterpressen werden nicht auf volle Leistung geschaltet, um die Justierung nicht zu beeinflussen. Es ist natürlich darauf zu achten, dass die Schienen trotzdem mit genügender Kraft festgehalten werden, damit sie sich nicht während der nachfolgenden Längsbewegungen verschieben können.

Nun kann nach an sich bekannten Techniken des Schienenschweissens vorgegangen werden. Dabei wird der Schlitten 2, welcher das eine Schienenende eingespannt hält, mittels des Presszylinders 11 in das Gehäuse 1 hineingeschoben, wodurch die Schienenenden langsam aufeinanderzu bewegt werden. Gleichzeitig werden durch die Transformatoren (vgl. Bezugszeichen 42.1, 42.2 der Fig. 7b) starke Ströme in die Schienen gebracht. Das wegspritzende glühende Schienenmaterial trifft die Abgratmesser nicht, da diese in den aussenseitlichen Vertiefungen der Kupferblöcke (vgl. Bezugszeichen 38 in Fig. 6a, b) geschützt untergebracht sind.

Ist die Schweissung beendet und der Strom abgeschaltet, wird der vom Einspannsystem des Schlittens gehaltene Schienenteil bezüglich der Justierhilfen mittenzentriert und werden die Abgratmesser (vgl. Bezugszeichen 50 in Fig. 8) durch Betätigen der entsprechenden Hubzylinder (vgl. Bezugszeichen 64 in Fig. 8) an die Schiene 5b angelegt. Die Exzenterpressen des Schlittens werden gelöst und unter einem kräftigen Vorschub des Presszylinders 11 wird der Schlitten 2 mit den Abgratmessern über die Schweissstelle hinweggeschoben. Das überstehende Material am Schienenstoss wird dadurch entfernt. Es versteht sich, dass das Abgraten unmittelbar anschliessend an den die Schweissung abschliessenden Stauchschlag innerhalb von kürzester Zeit durchgeführt wird.

Zuletzt werden die Exzenterpressen gelöst, die Spannbalken abgeschwenkt und die Schienen freigegeben.

Die Erfindung beschränkt sich nicht auf das in den Figuren dargestellte Ausführungsbeispiel. Sowohl die Zugvorrichtung zum Ziehen der Schienen als auch die Einspannvorrichtung, die Abgratvorrichtung und/oder die Elektrodenanordnung können anders als dargestellt ausgeführt werden.

Zusammenfassend kann festgestellt werden, dass durch die Erfindung eine äusserst kompakte und leistungsfähige Schienenschweissanlage für den mobilen Einsatz geschaffen worden ist.

## Patentansprüche

1. Abbrennstumpfschweissanlage zum Verschweissen von Profilwerkstücken, insbesondere von Schienen und Rohren, umfassend
a) zwei relativ zueinander verschiebbare Einspannsysteme zum Festhalten und Positionieren der Profilwerkstücke auf einer geometrischen Werkstückeinspannachse, wobei die Einspannsysteme von einer ersten Seite her senkrecht zur Werkstückeinspannachse zugänglich sind, und
b) eine Vorrichtung zum Verschieben der Einspannsysteme, insbesondere zum Stauchen der Profilwerkstücke beim Schweissen,
c) mindestens einen, mit dem einen Einspannsystem (14.1) drehbar (12) und mit dem anderen (14.2) über mindestens einen Hebel (8) in Wirkverbindung stehenden Stauchkraftgenerator (11) zum Verschieben der Einspannsysteme (14.1, 14.2), wobei
d) der Stauchkraftgenerator (11) auf einer der zugänglichen ersten Seite bezüglich der Werkstückeinspannachse (17) diametral gegenüberliegenden zweiten Seite angeordnet ist und im wesentlichen in Richtung der Werkstückeinspannachse (17) arbeitet, und wobei
e) der Hebel (8) mit dem zweiten Einspannsystem (14.2) in einem nahe der Werkstückeinspannachse (17) befindlichen Kraftangriffspunkt (9) drehbar in Wirkverbindung steht,
dadurch gekennzeichnet, dass
f) die Vorrichtung zum Verschieben der Einspannsysteme einen in einem Gehäuse (1) linear verschiebbar gelagerten Schlitten (2), mit welchem der mindestens eine Hebel (8) im Kraftangriffspunkt (9) drehbar verbunden ist, und mindestens eine einerseits am Gehäuse (1) und andererseits am Drehpunkt des Hebels (8) drehbar befestigte (7a, 13) Zugstange (6a, 6b) aufweist.

2. Abbrennstumpfschweissanlage, insbesondere nach Anspruch 1, gekennzeichnet durch Kontaktelektroden (32.1, 32.2), die so ausgebildet sind, dass das Profilwerkstück (30a, 30b, 30c) an den Aussenseiten seines Kopfes (30a) und/oder seines Fusses (30b) kontaktiert wird.

3. Abbrennstumpfschweissanlage nach Anspruch 2, dadurch gekennzeichnet, dass die Kontaktelektroden (32.1, 32.2) Jeweils näherungsweise V-förmige, feststehende Oeffnungen zur Aufnahme der Profilwerkstücke (5a, 5b) bilden.

4. Abbrennstumpfschweissanlage, insbesondere nach einem der Ansprüche 1 bis 3, gekennzeichnet durch eine Abgratvorrichtung mit ein- und ausschwenkbaren Messern (50), welche in der ausgeschwenkten Position in oder hinter einer durch die der Schweissstelle zugewandten Vorderseite einer Kontaktelektrode (32.1, 32.2) definierten Ebene, sowie aussenseitlich der Kontaktelektroden (32.1, 32.2) gelagert sind.

5. Abbrennstumpfschweissanlage nach Anspruch 4, dadurch gekennzeichnet, dass die Messer (50) in der eingeschwenkten Position auf den Kontaktelektroden (32.1, 32.2) aufliegen und beim Abgraten die Kontaktelektroden (32.1, 32.2) mit den Messern (50) mittels des Stauchkraftgenerators (11) über die Schweissnahtstelle hinweggeschoben werden.

6. Abbrennstumpfschweissanlage, insbesondere nach einem der Ansprüche 1 bis 5, dadurch gekennzeichnet, dass die Einspannsysteme Exzenterpressen (15.1, ..., 15.4, 16.1, ..., 16.4) umfassen.

7. Abbrennstumpfschweissanlage nach Anspruch 6 zum Verschweissen von zumindest schienenähnlichen Profilwerkstücken, dadurch gekennzeichnet, dass das Einspannsystem als Exzenterpressen (15.1, ..., 15.4, 16.1, ..., 16.4) orthogonal zur Werkstückeinspannachse gelagerte Wellen mit exzentrisch gelagerten Spannbalken (19.1, 19.2) zum Einspannen der Profilwerkstücke aufweist, wobei die Spannbalken (19.1, 19.2) um eine zur Werkstückeinspannachse parallele Achse schwenkbar sind und an einem Profilsteg (30b) unter einem Profilkopf (30a) des Profilwerkstücks angreifen.

8. Abbrennstumpfschweissanlage nach Anspruch 7, dadurch gekennzeichnet, dass ein senkrecht zur Werkstückeinspannachse ausgerichteter Hubzylinder (24) vorgesehen ist, der die schwenkbaren Spannbalken (19.1, 19.2) mittels Zugstangen (27) betätigt.

9. Abbrennstumpfschweissanlage nach einem der Ansprüche 7 bis 8, dadurch gekennzeichnet, dass das Einspannsystem zum Einspannen eines Profilwerkstückes zwei Exzenterpressen mit je zwei Exzenterwellen (15.1, ..., 15.4) umfasst und dass je zwei auf derselben Seite der Einspannachse (17) angeordnete Exzenterwellen (15.1 und 15.2 resp. 15.3 und 15.4) durch einen mit einem Ende an der einen und mit dem anderen an der anderen Exzenterwelle (15.1 resp. 15.2; 15.3 resp. 15.4) angreifenden (21.1 resp. 21.2; 21.3 resp. 21.4) gemeinsamen Presszylinder (20.1, 20.2) angetrieben werden.

10. Abbrennstumpfschweissanlage, insbesondere nach einem der Ansprüche 1 bis 9, dadurch gekennzeichnet, dass zum Justieren der zu verschweissenden Enden der Profilwerkstücke (5a, 5b) mindestens vier entlang der Werkstückeinspannachse (17) angeordnete Justierprofile (33.1, 33.2, 34.1, 34.2) vorgesehen sind, welche je zumindest einen winkelförmigen Anschlag bieten, und dass Einspannpressen (15.1, ..., 15.4, 19.1, 19.2) derart an den Profilwerkstücken (5a, 5b) angreifen, dass letztere kantenjustiert in die winkelförmigen Anschläge gepresst werden.

11. Abbrennstumpfschweissanlage nach Anspruch 10, dadurch gekennzeichnet, dass zwei dieser Justierprofile (34.1, 34.2) als Kontaktelektroden (32.1, 32.2) ausgebildet sind.

## Claims

1. Flash-butt welding machine for welding profiled workpieces, especially rails and tubes, comprising
a) two chucking systems, which can be displaced relative to one another, for holding fast and positioning the profiled workpieces on a geometric workpiece chucking axis, the chucking systems being accessible from a first side perpendicular to the workpiece chucking axis; and
b) an apparatus for displacing the chucking systems, especially for compressing the profiled workpieces during welding;
c) at least one compression force generator (11) for displacing the chucking systems (14.1, 14.2) which is connected rotatably (12) and operatively to one chucking system (14.1) and which is in operative connection with the other (14.2) by way of at least one lever (8), wherein
d) the compression force generator (11) is arranged on a second side lying diametrically opposite the accessible first side with respect to the workpiece chucking axis (17) and operates substantially in the direction of the workpiece chucking axis (17), and wherein
e) the lever (8) is connected rotatably and operatively to the second chucking system (14.2) at a force application point (9) near the workpiece chucking axis (17);
characterised in that
f) the apparatus for displacing the chucking systems has a slide (2) which is mounted to be linearly displaceable in a housing (1) and to which the at least one lever (8) is rotatably connected at the force application point (9), and at least one connecting rod (6a, 6b) which is rotatably secured on the one hand to the housing (1) and on the other hand to the fulcrum of the lever (8).

2. Flash-butt welding machine, especially according to Claim 1, characterised by contact electrodes (32.1, 32.2) which are in a form such that the profiled workpiece (30a, 30b, 30c) is contacted on the outer sides of its head (30a) and/or of its foot (30b).

3. Flash-butt welding machine according to Claim 2, characterised in that the contact electrodes (32.1, 32.2) each form approximately V-shaped, fixed openings for receiving the profiled workpieces (5a, 5b).

4. Flash-butt welding machine, especially according to any one of Claims 1 to 3, characterised by a deburring device having blades (50) which can be swung in and out and which, when swung out, are mounted in or behind a plane defined by the front side of a contact electrode (32.1, 32.2), which side faces the welding position, and are also mounted outside the contact electrodes (32.1, 32.2).

5. Flash-butt welding machine according to Claim 4, characterised in that the blades (50), when swung in, rest on the contact electrodes (32.1, 32.2), and, during deburring, the contact electrodes (32.1, 32.2) together with the blades (50) are pushed over the weld seam by means of the compression force generator (11).

6. Flash-butt welding machine, especially according to any one of Claims 1 to 5, characterised in that the chucking systems comprise eccentric presses (15.1, ..., 15.4, 16.1, ..., 16.4).

7. Flash-butt welding machine according to Claim 6 for welding at least rail-like profiled workpieces, characterised in that the chucking system has, as eccentric presses (15.1, ..., 15.4, 16.1, ..., 16.4), shafts which are mounted at right-angles to the workpiece chucking axis and which have eccentrically mounted clamping struts (19.1, 19.2) for chucking the profiled workpieces, the clamping struts (19.1, 19.2) being pivotable about an axis parallel to the workpiece chucking axis and acting on a profiled web (30b) under a profiled head (30a) of the profiled workpiece.

8. Flash-butt welding machine according to Claim 7, characterised in that a lifting cylinder (24) which is oriented perpendicularly to the workpiece chucking axis is provided and operates the pivotable clamping struts (19.1, 19.2) by means of connecting rods (27).

9. Flash-butt welding machine according to either Claim 7 or Claim 8, characterised in that the chucking system for chucking a profiled workpiece comprises two eccentric presses each having two eccentric shafts (15.1, ..., 15.4) and in that each two eccentric shafts (15.1 and 15.2, 15.3 and 15.4, respectively) arranged on the same side of the chucking axis (17) are driven by a common press cylinder (20.1, 20.2) acting (21.1, 21.2, respectively; 21.3, 21.4, respectively) with one end on one and with the other end on the other eccentric shaft (15.1, 15.2, respectively; 15.3, 15.4, respectively).

10. Flash-butt welding machine, especially according to any one of Claims 1 to 9, characterised in that, in order to align the ends that are to be welded of the profiled workpieces (5a, 5b), at least four aligning profiles (33.1, 33.2, 34.1, 34.2) each providing at least one angular stop are arranged along the workpiece chucking axis (17), and in that chucking presses (15.1, ..., 15.4, 19.1, 19.2) act on the profiled workpieces (5a, 5b) in such a manner that the latter are pressed into the angular stops with their edges aligned.

11. Flash-butt welding machine according to Claim 10, characterised in that two of these aligning profiles (34.1, 34.2) are in the form of contact electrodes (32.1, 32.2).

## Revendications

1. Installation de soudage en bout par étincelage pour le soudage de pièces à traiter profilées, notamment de rails et de tubes, comprenant
a) deux systèmes de serrage déplaçables l'un par rapport à l'autre pour retenir fermement et positionner les pièces à traiter profilées sur un axe géométrique de serrage des pièces à traiter, les systèmes de serrage étant accessibles à partir d'un premier côté, perpendiculairement à l'axe de serrage des pièces à traiter, et
b) un dispositif pour décaler les systèmes de serrage, notamment pour comprimer les pièces à traiter profilées lors du soudage,
c) au moins un générateur de force de compression (11), qui peut tourner (14) avec un système de serrage (14.1) et coopère avec l'autre système de serrage (14.2) par l'intermédiaire d'au moins un levier (8), pour déplacer les systèmes de serrage (14.1, 14.2),
et dans lequel
d) le générateur de force de compression (11) est disposé sur un second côté accessible, qui est diamétralement opposé au premier côté par rapport à l'axe (17) de serrage des pièces à traiter, et travaille essentiellement dans la direction de l'axe (17) des pièces à traiter, et
e) le levier (8) coopère, tout en pouvant tourner, avec le second système de serrage (14.2) en un point (9) d'application de force, situé à proximité de l'axe (17) de serrage de la pièce à traiter,
caractérisée en ce que
f) le dispositif servant à déplacer les systèmes de serrage comporte un chariot (2), qui est monté de manière à être translatable linéairement dans un boîtier (1) et avec lequel le levier (8) est relié d e manière à pouvoir tourner au niveau du point (9) d'application de la force, et au moins une barre de traction (6a,6b) qui est fixée (7a,13) de manière à pouvoir tourner d'une part sur le boitier (1) et d'autre part au centre de rotation du levier (8).

2. Installation de soudage en bout par étincelage, notamment selon la revendication 1, caractérisée par des électrodes de contact (32.1, 32.2) qui sont agencées de telle sorte qu'un contact est établi sur la pièce à traiter profilée (30a,30b,30c), au niveau des faces extérieures de sa tête (30a) et/ou de sa base (30b).

3. Installation de soudage en bout par étincelage selon la revendication 2, caractérisée en ce que les électrodes de contact (32.1, 32.2) forment respectivement des ouvertures fixes, approximativement en forme de V, servant à loger les pièces à traiter profilées (5a,5b).

4. Installation de soudage en bout par étincelage, notamment selon l'une des revendications 1 à 3, caractérisée par un dispositif d'ébarbage comportant des couteaux (50) pouvant être appliqués et écartés et qui, dans la position écartée, sont supportés dans ou en arrière d'un plan défini par la face avant, tournée vers le point de soudage, d'une électrode de contact (32.1, 32.2), ainsi que sur le côté extérieur des électrodes de contact (32.1, 32.2).

5. Installation de soudage en bout par étincelage selon la revendication 4, caractérisée en ce que, dans leur position d'application, les couteaux (50) s'appliquent sur les électrodes de contact (32.1, 32.2) et, lors de l'ébarbage, les électrodes de contact (32.1, 32.2) sont repoussées, conjointement avec les couteaux (50), au-delà de la zone du joint soudé, au moyen du générateur de force de compression (11).

6. Installation de soudage en bout par étincelage, notamment selon l'une des revendications 1 à 5, caractérisée en ce que les systèmes de serrage comprennent des presses à excentrique (15.1, ..., 15.4, 16.1, ... 16.4).

7. Installation de soudage en bout par étincelage selon la revendication 6 pour le soudage au moins de pièces à traiter profilées semblables à des rails, caractérisée en ce que le système de serrage comporte, comme presses à excentrique (15.1, ..., 15.4, 16.1,, ..., 16.4), des arbres montés perpendiculairement à l'axe de serrage des pièces à traiter et comportant des barres de serrage (19.1, 19.2) montées de façon excentrique et servant à serrer les pièces à traiter profilées, les barres de serrage (19.1, 19.2) pouvant basculer autour d'un axe parallèle à l'axe de serrage des pièces à traiter et s'appliquant contre une barrette profilée (30b) au-dessous d'une tête profilée (30a) de la pièce à traiter profilée.

8. Installation de soudage en bout par étincelage selon la revendication 7, caractérisée en ce qu'il est prévu un vérin (24) orienté perpendiculairement à l'axe de serrage des pièces à traiter et qui actionne les barres de serrage pivotantes (19.1, 19.2), au moyen de barres de traction (27).

9. Installation de soudage en bout par étincelage selon l'une des revendications 7 et 8, caractérisée en ce que le système de serrage utilisé pour le serrage d'une pièce à traiter profilée comprend deux presses à excentriques comportant chacune deux arbres excentriques (15.1, ..., 15.4) et que respectivement deux arbres excentriques (15.1 et 15.2 ou 15.3 et 15.4), disposés sur le même côté de l'axe de serrage (17), sont entraînés par un vérin de presse commun (20.1, 20.2) qui attaque (21.1 ou 21.2; 21.3 ou 21.4) par une extrémité un arbre d'excentrique et par l'autre extrémité l'autre arbre d'excentrique (15.1 ou 15.2; 15.3 ou 15.4).

10. Installation de soudage en bout par étincelage, notamment selon l'une des revendications 1 à 9, caractérisée en ce que pour l'ajustement des extrémités devant être soudées des pièces à traiter profilées (5a, 5b), il est prévu au moins quatre profilés d'ajustement (33.1, 33.2, 34.1, 34.2), qui sont disposés le long de l'axe (17) de serrage des pièces à traiter et qui forment chacun au moins une butée de forme anguleuse.

11. Installation de soudage en bout par étincelage selon la revendication 10, caractérisée en ce que deux de ces profilés d'ajustement (34.1, 34.2) sont agencés sous la forme d'électrodes de contact (32.1, 32.2).
